# EUROPÄISCHE PATENTSCHRIFT

(11) **EP 1 467 133 B1**
(45) Veröffentlichungstag und Bekanntmachung des Hinweises auf die Patenterteilung: **21.06.2006**
(21) Anmeldenummer: 04008425.3
(22) Anmeldetag: 07.04.2004
(51) Int. Cl.: F16K 31/00

(54) **Ventil mit piezoelektrischem Antrieb**
Valve with piezoelectric drive
Soupape à commande piézoélectrique

(30) Priorität: 07.04.2003 DE 20305667 U
(43) Veröffentlichungstag der Anmeldung: 13.10.2004
(73) Patentinhaber: Bürkert Werke GmbH & Co. KG, 74653 Ingelfingen (DE)
(72) Erfinder: Scheibe, Ralf, 74653 Künzelsau-Garnberg (DE)
(74) Vertreter: Degwert, Hartmut

(56) Entgegenhaltungen:
- EP-A- 0 915 277
- US-A- 4 074 701
- US-A- 4 765 370
- US-A- 5 711 346

## Beschreibung

Die Erfindung betrifft ein Ventil mit einem piezoelektrischen Antrieb.

Piezoelektrische Antriebe sind bekannt, die bei Anlegen einer elektrischen Spannung eine mechanische Kraft erzeugen. Diese piezoelektrischen Antriebe haben jedoch einen sehr kleinen Hub. Durch Aufeinanderstapeln einer Vielzahl von piezoelektrischen Plättchen kann der Hub zwar vergrößert werden. Dennoch bleibt er zu gering, um ein Ventil direkt schalten zu können. Um die durch einen piezoelektrischen Antrieb hervorgerufene Kraft in einem Ventil nutzen zu können, erfolgt daher eine mechanische Wegumsetzung des erzielten Hubs.

US 5,711,346 offenbart ein Ventil mit einer piezoelektrischen Lamelle. Diese piezoelektrische Lamelle ist mit einem Ende in einem starren Gehäuse verankert, während das andere Ende mit einem Betätigungsarm des Ventils gekoppelt ist. Bei Anlegen einer Spannung erfährt das Ende der Lamelle, das an den Betätigungsarm gekoppelt ist, eine Auslenkung und betätigt damit das Ventil.

Durch die Erfindung wird ein Ventil mit einem starren Gehäuse mit wenigstens einem im Gehäuse angeordneten Ventilsitz und einer im Gehäuse schwenkbar gelagerten Schließlamelle geschaffen, die mit dem Ventilsitz zusammenwirkt. Das Ventil weist einen Aktor auf, der mit einem auslenkbaren Aktorarm versehen ist, wobei die Schließlamelle spielfrei an den Aktorarm angekoppelt und durch den Aktorarm betätigbar ist. Das Ventil ist dadurch gekennzeichnet, daß der Aktor eine Aussparung aufweist, wobei die Aussparung zwei gegenüberliegende Flächen aufweist, zwischen denen sich ein Stapel piezoelektrischer Plättchen abstützt. Der Stapel wirkt als piezoelektrischer Antrieb mit dem Aktorarm zusammen.

Weitere vorteilhafte Ausführungsformen sind den beigefügten Ansprüchen zu entnehmen. Die Besonderheiten des erfindungsgemäßen Ventils ergeben sich aus der nachfolgenden Beschreibung anhand der Abbildungen. Diese Abbildungen zeigen:
Fig. 1 eine Vorderansicht eines erfindungsgemäßen Ventils;
Fig. 2 eine Seitenansicht eines erfindungsgemäßen Ventils;
Fig. 3 eine Detailansicht aus Fig.2;
Fig. 4 einen Längsschnitt durch ein erfindungsgemäßes Ventil entlang einer Schnittlinie IV-IV wie in Fig. 2 gezeigt;
Fig. 5 eine Ausschnittsvergrößerung des Fluidikbereichs.

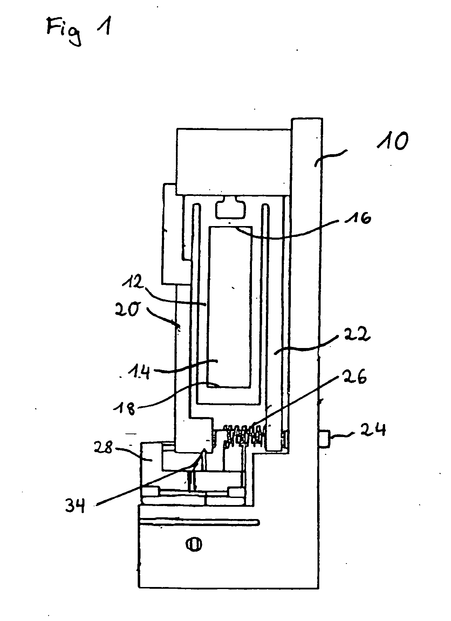

Figur 1 zeigt in Vorderansicht eine bevorzugte Ausführungsform eines erfindungsgemäßen Ventils als 3/2-Wege-Ventil mit einem starren Gehäuse 10, in dem ein Aktor 12 mit piezoelektrischen Antrieb 14 sitzt. Der piezoelektrische Antrieb 14 ist als Stapel aus piezoelektrischen Plättchen ausgeführt, der sich spielfrei zwischen zwei einander gegenüberliegenden Flächen 16,18 einer quaderförmigen Aussparung des Aktors 12 abstützt. Der aus massivem Metall bestehende Aktor 12 hat oberhalb einer quaderförmigen Aussparung, worin der piezoelektrische Antrieb 14 eingeschlossen ist, eine weitere nach oben zum Gehäuse hin offene, sich verjüngende Aussparung. Seitlich von dieser Aussparung sind über dünne Stege ein auslenkbarer Aktorarm 20 und ein Stützarm 22 einteilig angeschlossen. Stützarm 22 ist parallel zu Aktorarm 20 und auf einer dazu senkrechten Schraube 24 am Gehäuse 10 abgestützt. Diese Schraube 24 erlaubt eine spielfreie Fixierung und Justage des Stützarms 22, wobei eine Druckfeder 26 den Stützarm 22 gegen die Schraube 24 drückt und so sicherstellt, daß kein Spiel entsteht. Die mediengetrennte Ventilfluidik 28 befindet sich unterhalb des Aktorarms 20. Wird eine elektrische Spannung geeigneter Größe an den piezoelektrischen Antrieb 14 angelegt, so führt dies zu einer Auslenkung des Aktorarms 20. Diese Auslenkung des Aktorarms 20 wird für eine Betätigung des Ventils genutzt, wie an Hand der folgenden Figuren näher erläutert wird.

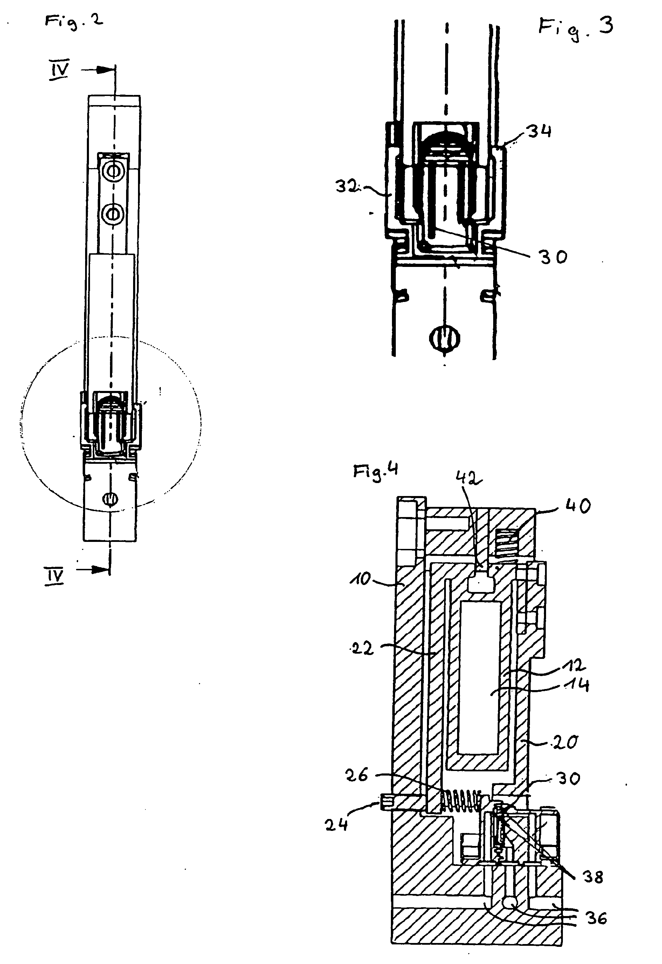

Figur 2 zeigt eine Seitenansicht des Ventils und Figur 3 eine Vergrößerung des in Figur 2 durch einen Kreis begrenzten Ausschnitts. Eine Schließlamelle 30, mit der eine Öffnung oder Abdichtung von zwei einander gegenüberliegenden Ventilsitzen erfolgt, weist einen Betätigungsarm 32 auf, von dem ein freies Ende über eine auch in Figur 1 erkennbare Schneiden-Lagerung 34 mit einem freien Ende des Aktorarms 20 gekoppelt ist. Eine Auslenkung des Aktorarms 20 führt spielfrei über die Schneiden-Lagerung 34 zu einer Auslenkung des Betätigungsarms 32 und damit zu einer Betätigung der Schließlamelle 30. Einen Schnitt entlang der Schnittlinie IV-IV zeigt Figur 4, wobei das Ventil im Vergleich zu der Darstellung in Figur 1 um 180° gedreht ist, also eine Sicht von hinten erfolgt.

Im Schnitt erkennbar sind innerhalb der Ventilfluidik 28 Fluidkanäle 36, die an Ventilsitze 38 herangeführt sind. Gegenüber der Ventilfluidik 28 ist eine Druckfeder 40 zwischen dem Gehäuse 10 und dem Aktor 12 angeordnet und erzeugt so über Aktorarm 20 einen Anpreßdruck auf die Schneiden-Lagerung 34. Ein Vorsprung 42 des Gehäuses 10 ragt in die nach oben offene Aussparung des Aktors 12 und fixiert ihn so in seiner Position.

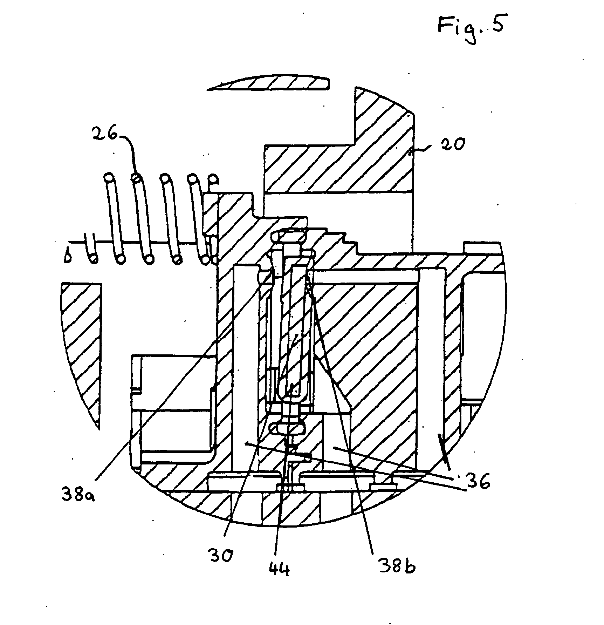

Figur 5 zeigt im Schnitt in Detailansicht den Fluidikbereich in der Nähe der Schließlamelle 30. Ventilsitz 38a ist ein "normally-open" Ventilsitz, Ventilsitz 38b ist ein "normally-closed" Ventilsitz. Schließlamelle 30 ist in Figur 5 in einer Position, in der sie den Ventilsitz 38b abdichtet. Bei einer Bewegung des Aktorarms 20 in Figur 5 nach links, schwenkt Schließlamelle 30 um einen Drehpunkt 44 ebenfalls nach links und verschließt den "normally-open" Ventilsitz 38a.

## Patentansprüche

1. Ventil mit einem starren Gehäuse (10), wenigstens einem im Gehäuse (10) angeordneten Ventilsitz (38) und einer im Gehäuse (10) schwenkbar gelagerten Schließlamelle (30), die mit dem Ventilsitz zusammenwirkt, und mit einem Aktor (12), der mit einem auslenkbaren Aktorarm (20) versehen ist, wobei die Schließlamelle (30) spielfrei an den Aktorarm (20) angekoppelt und durch den Aktorarm (20) betätigbar ist, **dadurch gekennzeichnet, daß** der Aktor (12) eine Aussparung aufweist, wobei die Aussparung zwei gegenüberliegende Flächen (16, 18) aufweist, zwischen denen sich ein Stapel piezoelektrischer Plättchen abstützt, wobei der Stapel als piezoelektrischer Antrieb (14) mit dem Aktorarm zusammenwirkt.

2. Ventil nach Anspruch 1, bei dem die Schließlamelle (30) einen Betätigungsarm (32) aufweist, dessen freies Ende über eine Schneiden-Lagerung (34) mit einem freien Ende des Aktorarms (20) gekoppelt ist.

3. Ventil nach Anspruch 2, bei dem der Aktor (12) im Gehäuse (10) beweglich geführt ist und der Aktor durch eine am Gehäuse (10) abgestützte Feder (40) mit dem Aktorarm (20) die Schneiden-Lagerung (34) beaufschlagt.

4. Ventil nach einem der vorstehenden Ansprüche, bei dem der Aktor (12) einen auslenkbaren Stützarm (22) aufweist, der am Gehäuse (10) abgestützt ist.

5. Ventil nach Anspruch 4, bei dem der Stützarm (22) auf einer Einstellschraube (24) abgestützt ist, die in eine Gewindebohrung des Gehäuses (10) eingeschraubt ist.

6. Ventil nach Anspruch 5, bei dem der Stützarm (22) zwischen der Einstellschraube (24) und einer am Gehäuse (10) abgestützten Druckfeder (26) verspannt ist.

7. Ventil nach Anspruch 5, bei dem der Aktorarm (20) und der Stützarm (22) parallel zueinander und senkrecht zu der Wirkrichtung von Einstellschraube (24) und Druckfeder (26) sind.

## Claims

1. A valve comprising a rigid housing (10), at least one valve seat (38) arranged in the housing (10), and a closing lamella (30) mounted for pivoting movement in the housing (10) and cooperating with the valve seat, and an actuator (12) which is provided with a deflectable actuator arm (20), the closing lamella (30) being coupled to the actuator arm (20) without play and being adapted to be actuated by the actuator arm (20), **characterized in that** the actuator (12) has a recess, the recess having two opposite faces (16, 18) between which a stack of piezoelectric laminas is supported, the stack cooperating with the actuator arm to serve as a piezoelectric drive (14).

2. The valve according to claim 1, in which the closing lamella (30) includes an operating arm (32) having a free end that is coupled to a free end of the actuator arm (20) by means of a knife-edge bearing (34).

3. The valve according to claim 2, in which the actuator (12) is movably guided in the housing (10) and the actuator arm (20) of the actuator acts upon the knife-edge bearing (34) by a spring (40) resting against the housing (10).

4. The valve according to any of the preceding claims, in which the actuator (12) includes a deflectable supporting arm (22) resting against the housing (10).

5. The valve according to claim 4, in which the supporting arm (22) is supported on an adjusting screw (24) that is screwed into a threaded bore of the housing (10).

6. The valve according to claim 5, in which the supporting arm (22) is braced between the adjusting screw (24) and a pressure spring (26) resting against the housing (10).

7. The valve according to claim 5, in which the actuator arm (20) and the supporting arm (22) are parallel to each other and perpendicular to the direction of action of the adjusting screw (24) and of the pressure spring (26).

## Revendications

1. Valve comportant un boîtier (10) rigide, au moins un siège de valve (38) agencé dans le boîtier (10) et une lamelle de fermeture (30) montée avec capacité de pivotement dans le boîtier (10), laquelle coopère avec le siège de valve, et comportant un actionneur (12) qui est pourvu d'un bras d'actionneur (20) susceptible de défléchir, la lamelle de fermeture (30) étant accouplée sans jeu sur le bras d'actionneur (20) et susceptible d'être actionnée par le bras d'actionneur (20), **caractérisé en ce que** l'actionneur (12) présente un évidement, l'évidement présentant deux surfaces (16, 18) opposées entre lesquelles prend appui une pile de plaquettes piézoélectriques, la pile coopérant avec le bras d'actionneur et servant d'entraînement piézoélectrique (14).

2. Valve selon la revendication 1, dans laquelle la lamelle de fermeture (30) présente un bras d'actionnement (32) dont l'extrémité libre est couplée à une extrémité libre du bras d'actionneur (20) par l'intermédiaire d'un support à couteau (34).

3. Valve selon la revendication 2, dans laquelle l'actionneur (12) est guidé mobile dans le boîtier (10), et l'actionneur sollicite le support à couteau (34) par le bras d'actionneur (20) au moyen d'un ressort (40) prenant appui sur le boîtier (10).

4. Valve selon l'une des revendications précédentes, dans laquelle l'actionneur (12) présente un bras de soutien (22) susceptible de défléchir, qui prend appui sur le boîtier (10).

5. Valve selon la revendication 4, dans laquelle le bras de soutien (22) prend appui sur une vis de réglage (24) qui est vissée dans un perçage taraudé du boîtier (10).

6. Valve selon la revendication 5, dans laquelle le bras de soutien (22) est serré entre la vis de réglage (24) et un ressort de pression (26) en appui sur le boîtier (10).

7. Valve selon la revendication 5, dans laquelle le bras d'actionneur (20) et le bras de soutien (22) sont parallèles l'un à l'autre et perpendiculaires à la direction effective de la vis de réglage (24) et du ressort de pression (26).
